**Europäisches Patentamt**

**European Patent Office**

**Office européen des brevets**

(19)

(11) Publication number : **0 508 953 A1**

# EUROPEAN PATENT APPLICATION

(12)

(21) Application number : **92810239.1**

(22) Date of filing : **31.03.92**

(51) Int. Cl.⁵ : **C02F 5/14**

(30) Priority : **08.04.91 US 682052**
**11.07.91 US 728401**

(43) Date of publication of application :
**14.10.92 Bulletin 92/42**

(84) Designated Contracting States :
**DE FR GB IT NL**

(71) Applicant : **CIBA-GEIGY AG**
**Klybeckstrasse 141**
**CH-4002 Basel (CH)**

(72) Inventor : **Sullivan, Patrick J.**
**166 Old Brookfield Road**
**Danbury, CT 06811 (US)**

(54) **Method for scale, corrosion and microbiological control in aqueous systems.**

(57)    The decomposition of phosphonates by halogen containing substances in aqueous systems can be diminished or prevented by treating such waters with primary, secondary or tertiary amines in accordance with the processes of the present invention.

EP 0 508 953 A1

The use of phosphonates for scale and corrosion control in recirculating cooling water is widely practiced as is the use of halogen containing substances such as halogenated hydantoins, bromine, chlorine, hypochlorite and bromide salts for microbiological control. However, the simultaneous use of these two chemicals can be disadvantageous inasmuch as these halogen containing substances have been demonstrated to significantly break down many phosphonates. When this occurs in a field application, the effectiveness of the phosphonate as a scale and corrosion control agent is substantially reduced and the orthophosphate which is a product of this reaction can contribute to scaling problems. Furthermore, excessive halogen levels are frequently observed in typical plant cooling circuits. Under these conditions, the phosphonates can break down to a sufficient degree to cause the problems noted hereinabove. Additionally, a number of dissolved ions typically found in cooling waters have been found to catalyze the breakdown of phosphonates.

U.S. Patent Nos. 4,711,724 and 4,642,194 disclose a method of preventing the decomposition of phosphonates which are present to prevent scale and corrosion industrial cooling waters when such waters contain halogen containing substances for microbiological control. The process comprises treating said waters with a water-soluble nitrogen-containing compound selected from the group consisting of (a) water-soluble primary and secondary amines; (b) ammonia; (c) sulfamic acid and its water-soluble salts; and (d) water-soluble amides. No indication of the efficacy of such amines is provided in these patents.

Surprisingly, it has been found that the processes of the present invention eliminate this unfavorable result.

The present invention relates to a method for scale, corrosion and microbiological control in aqueous systems comprising:

(a) continuously treating said aqueous system with an effective scale and corrosion preventing amount of a phosphonate;

(b) adding 2 to 5 ppm, based on the aqueous system, of a primary, secondary or tertiary amine to the aqueous system using a slug dosing technique; and

(c) upon substantially complete dispersion of the amine in the aqueous system adding an effective biocidal amount of a biocide selected from the group consisting of halogenated hydantoins, bromine, chlorine, hypochlorite and bromide salts using a slug dosing technique.

Alternatively, for aqueous systems pre-treated with biocidal amounts of a halogen containing substance, the process comprises treating said aqueous system with a combination of 2 to 20 ppm (as $PO_4$), based on the aqueous system, of a phosphonate and 2 to 5 ppm, based on the aqueous system, of a primary, secondary or tertiary amine.

Suitable phosphonates which can be used in the method of the present invention are all well known to those skilled in the art and include any phosphonate useful for scale and corrosion control in industrial process waters which is degraded by chlorine, but especially: 2-hydroxy-phosphonoacetic acid (HPA); 1,1-hydroxyethylidine diphosphonic acid (HEDP); tris aminomethane phosphonic acid (AMP); ethylene diamine tetra(methylenephosphonic acid) (ENTP); hexamethylene diamine tetra(methylenephosphonic acid) (HMTP); and diethylene triamine penta(methylenephosphonic acid). They may be used as the free acid or in their water soluble salt form. HPA is the preferred phosphonate scale and corrosion control agent.

These phosphonates are well known materials and are described in the following patents: U.S. Patent Nos. 3,214,454; 4,026,815; 3,336,221 and 3,278,446.

In practice, the amount of phosphonate which is used for scale and corrosion control will vary depending upon the particular aqueous system being treated. The phosphonates are generally used in an amount ranging from about 2 to 20 ppm (as $PO_4$), preferably about 2 to about 10 ppm (as $PO_4$), based on the aqueous system.

Suitable primary, secondary and tertiary amines include mono-, di- and tri-$C_1$-$C_{10}$-alkylamines such as methylamine, dimethylamine, trimethylamine, ethylamine, diethylamine, triethylamine, propylamine, dipropylamine, tripropylamine; mono- and di-$C_1$-$C_{10}$-alkanolamines such as mono- and di-ethanolamine; heterocyclic amines such as morpholine; aromatic amines such as pyridine and any other amine that is capable of acting as a halogen stabilizer. Monoethanolamine is the preferred amine stabilizer. The amine is employed in concentrations ranging from about 1 to about 20 ppm, and preferably, from about 2 to about 5 ppm, based on the aqueous system.

Applicable biocides include halogenated hydantoins, bromine, chlorine, hypochlorite and bromide salts, with halogenated hydantoins and bromine being preferred.

The biocide is added upon complete dispersion of the amine in the aqueous system. Such dispersion time period is, of course, dependent upon the particular aqueous system being treated. Generally, the dispersion is accomplished in about 15 to about 30 minutes.

The amount of biocide needed for microbiological control will vary depending upon the aqueous system which is treated. The biocides are generally employed in an amount sufficient to maintain a free halogen residual ranging from about 0.1 to about 1 ppm, based on the aqueous system.

The present invention further includes an alternative method for stabilizing scale control agents in aqueous systems containing or which have been pre-treated with 0.1 to 1 ppm of free halogen expressed as chlorine comprising treating said water with a combination of 2 to 20 ppm (as $PO_4$) of a phosphonate and 2 to 5 ppm of a primary, secondary or tertiary amine, based on the aqueous system. Suitable phosphonates and amines, together with their preferences, are set forth hereinabove. The phosphonates are preferably used in an amount ranging from about 2 to about 10 ppm (as $PO_4$), based on the aqueous system.

It is to be noted that the biocide and amine are added using a "slug dosing" technique. This technique involves the addition of chemical in excess of the amount required to produce a desired concentration after a specific time interval. As the system losses water over a period of rime, the residual is gradually lowered to an unacceptable level, therefore, requiring another slug.

The processes are suitable for treating aqueous systems having a pH within the range of 3-12 and preferably 6-9. With respect to aqueous systems suitable for treatment in accordance with the present invention, of particular interest are cooling water systems, steam generating systems, seawater evaporators, hydrostatic cookers, gas scrubbing systems, closed circuit hearing systems and aqueous-based refrigeration systems.

Additionally, a wide variety of optional ingredients may also be included. For example calcium carbonate stabilizers, such as a maleic acid terpolymers (BELCLENE® 283 from Ciba-Geigy Corporation, Ardsley, New York) and/or yellow metal or copper corrosion inhibitors, such as tolyltriazole may be used. Further corrosion inhibitors may also be used such as, for example, water soluble zinc salts; phosphates; polyphosphates; other phosphonocarboxylic acids and their salts, for example, 2-phosphonobutane-1,2,4-tricarboxylic acid; molybdates, e.g. sodium molybdate; silicates, e.g. sodium silicate; benzotriazole, 5,5-methylene-bis-benzotriazole or copper deactivating benzotriazole or tolyltriazole derivatives; N-acyl sarcosines; N-acylimino diacetic acids; and polycarboxylic acids, for example, polymaleic acid and polyacrylic acid, as well as their respective alkali metal salts, copolymers of maleic anhydride, copolymers of acrylic acid and substituted derivatives of polymaleic and polyacrylic acids and their copolymers.

Moreover, further dispersing and/or threshold agents may be present, e.g. polymerized acrylic acid (or its salts), phosphino-polycarboxylic acids, hydrolyzed polyacrylonitrile, polymerized methacrylic acid and its salts, polyacrylamide and copolymers thereof from acrylic and methacrylic acids, lignin sulfonic acid and its salts, tannin, naphthalene sulphonic acid/formaldehyde condensation products, starch and its derivatives, cellulose, acrylic acid/lower alkyl hydroxyacrylate copolymers such as those described in U.S. Patent No. 4,029,577, sulfonated styrene/maleic anhydride copolymers, styrene/maleic anhydride copolymers and sulfonated styrene homopolymers such as those described in the U.S. Patent No. 4,374,733 and combinations thereof. Specific threshold agents, such as for example, 2-phosphonobutane-1,2,4-tricarboxylic acid, hydrolyzed polymaleic anhydride and its salts, alkyl phosphonic acids, 1-aminoalkyl-1,1 -diphosphonic acids and their salts, and alkali metal polyphosphates, may also be used.

Precipitating agents such as alkali metal orthophosphates, carbonates; antifoaming agents such as silicones e.g. polydimethylsiloxanes, distearylsebacamide, distearyl adipamide and related products derived from ethylene oxide and/or propylene oxide condensations, in addition to fatty alcohols, such as capryl alcohols and their ethylene oxide condensates, may be used.

The following examples serve to give specific illustrations of the practice of this invention but they are not intended in any way to limit the scope of this invention.

Example 1

Chemical Parameters of the Test

| | |
|---|---|
| pH | 8.2-8.5 |
| Calcium | 300 ppm (as $CaCO_3$) |
| Magnesium | 150 ppm (as $CaCO_3$) |
| Alkalinity | 150 ppm (as $CaCO_3$) |
| *BROMICIDE® | 30 ppm as product |

*bromo-chloro-dimethyl-hydantoin from Great Lakes Chemical

Reagent grade monoethanolamine from Aldrich Chemical Company

Reagent grade triethanolamine from Aldrich Chemical Company

Additives

10 ppm (as PO$_4$) BELCOR® 575 (2-hydroxy-phosphonoacetic acid from Ciba-Geigy Corporarion, Ardsley, New York)
2 ppm (solid) COBRATEC®TT-50-S (tolyltriazole from PMC Specialtes Group Inc.)

The test is conducted in 250 ml beakers. The order of addition is distilled water followed by the additives, calcium, magnesium, alkalinity, amine and BROMOCIDE®. The volume is adjusted so that on addition of the BROMOCIDE® the total volume is 100 mls. The solutions are then stirred for a minute and then allowed to sit. After 15 minutes, the total halogen concentration and the ortho-phosphate concentration are measured using a DPD colorimetric method adapted from Standard Method for the Examination of Water and Wastewater, 15th Edition, published by the American Public Health Association, American Water Works Association, and Water Pollution Control Federation, p. 292 (1980). Ortho-phosphate concentrations are determined using an amino acid colorimetric method also adapted from Standart Method for the Examination of Water and Wastewater, 15th Edition, published by the American Public Health Association, American Water Works Association, and Water Pollution Control Federation, p. 409-425 (1980). The test is repeated four times and the average of the four runs and the particular amine employed are indicated in Table 1. % Reversion refers to the amount of 2-hydroxy-phosphonoacetic acid which is converted to ortho-phosphate. No significant deviation between the average and each individual run is observed.

Table 1

| Amine | % Reversion | Free Ortho-Phosphate (ppm) |
|---|---|---|
| 5 ppm monoethanolamine | 4% | 0.4 |
| 10 ppm monoethanolamine | 3% | 0.3 |
| 20 ppm monoethanolamine | 3% | 0.3 |
| 10 ppm triethanolamine | 43% | 4.3 |
| 20 ppm triethanolamine | 45% | 4.5 |
| 30 ppm triethanolamine | 37% | 3.7 |
| no amine [control] | 58% | 5.8 |

The results of this bench test demonstrate that the amines reduce the rate of reversion of 2-hydroxy-phosphonoacetic acid.

Example 2

The process simulation studies - Equipment and Methods

The system test loop is comprised of a centrifugal pump with a flow control valve, flow meter, specimen assemblies and the appropriate plumbing. The volumetric flow rate of the test water which is supplied from and returned to the basin is controlled to yield the desired linear velocity over the test specimens. The velocity is 0.92 meters per second in all the tests reported. The test specimen assemblies use straight lengths of 1.6 cm O.D. tubing of the desired metallurgy (in these tests C-1010 mild steel and Admiralty Brass) mounted in the center of a 2.54 cm I.D. glass tube. This creates an annular cavity which is the test water flow path. Both heat transfer specimens (heat exchangers) and non-heat transfer specimens (coupons) are mounted in the same fashion. The exposed surface lengths for the heat exchangers are 30.5 cm and 6.4 cm for the coupons. The heat source for the heat exchanger specimen is an electric cartridge immersion heater which is placed inside the specimen tube. Heat flux is controlled by adjusting the voltage to this heater using a rheostat. The test loop is designed to accommodate 1 heat exchanger and 4 coupons with the coupons being downstream of the heat exchanger. Test water solutions are heated to 40°C and the pH controlled as set forth hereinabove. Additive dosages are four times the maintenance dosage for the first two days of the test. After two days, the additive feed is reduced to the maintenance dosage, 10 ppm halogenated hydantoin is slug dosed daily to the system at 10 ppm product.

The basin (a rectangular plastic container) acts as the chemostat for the experiment. It is the supply source for the test loop. It is also where physical and chemical control of the water condition is performed. The water returning from the test loop is aerated by aspiration of room air. Water temperature is controlled by cold tap water flow in a stainless steel cooling coil located in the bottom of the basin being turned on and off via a solenoid valve/temperature controller combination. The temperature is controlled to between 38-41°C in these tests. When appropriate, dilute acid is added to the basin for pH control via an acid pump/pH controller combination with the pH electrode mounted in the basin. Water treatment additives are added via syringe pumps based on additive replacement requirements from blow-down losses. Since these are non-evaporative units, the blow-down rate is equal to the make-up rate. This is accomplished by maintaining a constant system capacity using a stand pipe surrounded by a still well so that blow-down is by overflow. The system half life used in these tests is about 17,5 hours based on a system capacity of 15 liters and a combined make-up rate of 10 milliliters/minute. The test duration is normally 14 days.

The returning aerated water from the test loop is directed below basin water level, such that it creates a minor vortex to ensure good mixing within the basin. This is important since make-up water solutions, acid and treatment additives are added in separated streams to this basin water.

The make-up water used is actually a blend of two make-up waters which are added to separate areas in the basin. This separate feed is needed because, when combined, the make-up water must be equal in composition to the concentrated water which it is simulating. Often, this results in solutions which are unstable with respect to precipitation even at room temperature. The two waters are designated as Hardness and Alkalinity make-up. They are prepared to yield the desired basin water chemistry when combined in a 1:1 mixture. For these experiments, the Hardness make-up tank contains calcium chloride and magnesium sulfate while the Alkalinity make-up contains sodium bicarbonate.

## Process Simulation Physical Parameters

Mild Steel Heat Exchanger
Heat Flux 10,000 BTU/ft$^2$/hr
Mild Steel/Admiralty Brass Coupons
Velocity 0.92 meters/second
38-41°C Basin Temperature
System 1/2 life 17.5 hours

## Chemical Parameters of the System Test Water Solutions

pH            8.5
Calcium       700 ppm (as $CaCO_3$)
Magnesium     350 ppm (as $CaCO_3$)
Alkalinity    150 ppm (as $CaCO_3$)
BROMICIDE® 10 ppm slug dosed daily

## Additives

8.75 ppm (as $PO_4$) BELCOR® 575 (2-hydroxy-phosphonoacetic acid from Ciba-Geigy Corporarion, Ardsley, New York)

5 ppm BELCLENE® 283 (maleic acid terpolymer from Ciba-Geigy Corporarion, Ardsley, New York)

2 ppm (solid) COBRATEC®TT-50-S (tolyltriazole from PMC Specialtes Group Inc.)

Test water solutions are heated to 40°C and the pH controlled as set forth hereinabove. Additive dosages are four times the maintenance dosage for the first two days of the test. After two days, the additive feed is reduced to the maintenance dosage, 10 ppm halogenated hydantoin is slug dosed daily to the system at 10 ppm product.

The initial total halogen concentration upon BROMICIDE® slug dose is consistently measured at 1 ppm as chlorine. After three hows, total measured halogen concentration is just below 1 ppm as chlorine (range 0.6-0.8 ppm), and the free halogen concentration is less than 0.5 ppm as chlorine.

The percent 2-hydroxy-phosphonoacetic acid reversion is about 40% throughout the BROMICIDE® slug dose (based on theoretical level of 2-hydroxy-phosphonoacetic acid). There is a minimal loss of the expected total phosphate concentration in the system. Therefore, the ortho-phosphate generated through reversion of 2-hydroxy-phosphonacetic acid by the BROMICIDE® is not precipitating.

The corrosion rates for the heat exchanger and the corrosion coupons and the amount of deposition in the heat exchanger are provided in Table 2.

Table 2

| MPY Corrosion Heat Exchanger | MDC Deposition Heat Exchanger | Corrosion Coupons |
|---|---|---|
| 2.3 | 0.30 | 2.7 MS |
| | | 0.3 AB |
| | | 3.4 MS |
| | | 0.4 AB |

MPY = mils penetration per year
MDC = mg deposited per day per $cm^2$
MS = Mild Steel
AB = Admiralty Brass

Example 3

The experiment of Example 2 is repeated except that about 15 minutes prior to the daily slug dosing of the BROMICIDE®, 2 ppm of monoethanolamine are slug dosed. After three hows, total halogen concentration measured is just below 1 ppm as chlorine (range 0.6-0.8 ppm) and the free halogen concentration is less than 0.5 ppm as chlorine.

The percent 2-hydroxy-phosphonoacetic acid reversion is about 7% throughout the hydantoin slug dose (based on theoretical levels of 2-hydroxy-phosphonoacetic acid).

The corrosion rates for the heat exchanger and the corrosion coupons and the amount of deposit on the heat exchanger are provided in Table 3.

### Table 3

| MPY Corrosion Heat Exchanger | MDC Deposition Heat Exchanger | Corrosion Coupons |
|---|---|---|
| 1.8 | 0.16 | 3.2 MS |
| | | 0.2 AB |
| | | 3.8 MS |
| | | 0.2 AB |

MPY = mils penetration per year

MDC = mg deposited per day per $cm^2$

MS  = Mild Steel

AB  = Admiralty Brass

As can be seen from the difference in 2-hydroxy-phosphonoacetic acid reversion in Examples 2 and 3, 40% and 7%, respectively, the slug dosing of the amine prior to the daily slug dosing of the BROMICIDE® results in a significant improvement.

### Example 4

The experiment in Example 2 is repeated using the following additives, such that the ethanolamine is formulated with the additives in a single fed formulation:

### Additives

8.75 ppm (as $PO_4$) BELCOR® 575 (2-hydroxy-phosphonoacetic acid from Ciba-Geigy Corporarion, Ardsley, New York)

5 ppm BELCLENE® 283 (maleic acid terpolymer from Ciba-Geigy Corporation, Ardsley, New York)

2 ppm (solid) COBRATEC®TT-50-S (tolyltriazole from PMC Specialtes Group Inc.)

2 ppm reagent grade ethanolamine from Aldrich Chemical Company

The initial total halogen concentration upon BROMICIDE® slug dose is consistently measured at 1 ppm as chlorine. After three hows, total measured halogen concentration is just below 1 ppm as chlorine (range 0.6-0.8 ppm) and the free halogen concentration is less than 0.5 ppm as chlorine.

The percent 2-hydroxy-phosphonoacetic acid reversion is about 7-10% throughout the hydantoin slug dose (based on theorerical 2-hydroxy-phosphonoacetic acid).

The corrosion rates for the heat exchanger and the corrosion coupons and the amount of deposit on the heat exchanger are provided in Table 4.

Table 4

| MPY | MDC | |
|---|---|---|
| Corrosion | Deposition | Corrosion |
| Heat Exchanger | Heat Exchanger | Coupons |
| 1.6 | 0.16 | 2.9 MS |
| | | 0.2 AB |
| | | 2.9 MS |
| | | 0.2 AB |

MPY = mils penetration per year

MDC = mg deposited per day per $cm^2$

MS  = Mild Steel

AB  = Admiralty Brass

The combination of the phosphonate and the amine in the concentration provided in the instant application result in a 2-hydroxy-phosphonoacetic acid reversion of 7- 10% as opposed to the 40% obtained without the use of the amine in Example 2.

## Claims

1. A method for scale, corrosion and microbiological control in aqueous systems comprising:
(a) continuously treating said aqueous system with an effective scale and corrosion preventing amount of a phosphonate;
(b) adding 2 to 5 ppm, based on the aqueous system, of a primary, secondary or tertiary amine to the aqueous system using a slug dosing technique; and
(c) upon substantially complete dispersion of the amine in the aqueous system adding an effective biocidal amount of a biocide selected from the group consisting of halogenated hydantoins, bromine, chlorine, hypochlorite and bromide salts using a slug dosing technique.

2. A method for scale control in an aqueous system containing 0.1 to 1 ppm of free halogen, expressed as chlorine, comprising treating said aqueous system with a combination of 2 to about 20 ppm (as $PO_4$) of a phosphonate and 2 to 5 ppm of a primary, secondary or tertiary amine, based on the aqueous system.

3. A method according to either claim 1 or claim 2 wherein said aqueous system comprises a cooling water system, a steam generating system, a seawater evaporator, a hydrostatic cooker, a gas scrubbing system, a closed circuit heating system or an aqueous-based refrigeration system.

4. A method according to either claim 1 or claim 2 wherein the phosphonate is selected from the group consisting of 2-hydroxy-phosphonoacetic acid, 1,1-hydroxyethylidine diphosphonic acid, tris aminomethane phosphonic acid, ethylene diamine tetra(methylenephosphonic acid), hexamethylene diamine tetra(methylenephosphonic acid), and diethylene triamine penta(methylenephosphonic acid).

5. A method according to claim 4 wherein said phosphonate is 2-hydroxy-phosphonoacetic acid.

5. A method according to claim 1 wherein about 2 to about 20 ppm (as $PO_4$) phosphonate is present, based on the aqueous system.

6. A method according to claim 2 wherein about 2 to about 10 ppm (as $PO_4$) phosphonate, based on the aqueous system, is present therein.

7. A method according to either claim 1 or claim 2 wherein said primary, secondary or tertiary amine is selected from the group consisting of methylamine, dimethylamine, trimethylamine, ethylamine, diethylamine, triethylamine, propylamine, dipropylamine, tripropylamine, mono and diethanolamines, morpholine and pyridine.

8. A method according to either claim 1 or claim 2 wherein the amine is monoethanolamine.

9. A method according to either claim 1 or claim 2 wherein said dispersion of the slug dosed primary, secondary or tertiary amine is accomplished in about 15 to about 30 minutes.

**10.** A method according to either claim 1 or claim 2 wherein said biocide is a halogenated hydantoin.

**11.** A method according to either claim 1 or claim 2 wherein a calcium carbonate stabilizer and/or a yellow metal or copper corosion inhibitor is added with the phosphonate.

European Patent Office

**EUROPEAN SEARCH REPORT**

Application Number

EP 92 81 0239

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X,D | US-A-4 642 194 (D.A.JOHNSON) <br> * column 1 - column 2 * <br> --- | 1,3,4 | C02F5/14 |
| X,D | US-A-4 711 724 (D.A.JOHNSON) <br> * column 1 - column 2 * <br> --- | 1,3,4,7 | |
| A | US-A-4 759 852 (M.G.TRULEAR) <br> * the whole document * <br> ----- | 3,4 | |
| | | | **TECHNICAL FIELDS SEARCHED (Int. Cl.5 )** |
| | | | C02F |

The present search report has been drawn up for all claims

| Place of search | Date of completion of the search | Examiner |
|---|---|---|
| THE HAGUE | 21 JULY 1992 | GONZALEZ ARIAS,M.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)